# EUROPEAN PATENT APPLICATION

(11) **EP 4 512 699 A1**
(43) Date of publication of application: **26.02.2025**
(21) Application number: 23791064.1
(22) Date of filing: 10.04.2023
(51) Int. Cl.: B62D 25/20, B62D 21/15

(54) **UNDER VEHICLE BODY FRAME ASSEMBLY AND VEHICLE**

(30) Priority: 17.04.2022 CN 202210400700
(71) Applicant: Beijing Chehejia Automobile Technology Co., Ltd., Beijing 101300 (CN)
(72) Inventor: QIN, Le, Beijing 101300 (CN); JIANG, Ming, Beijing 101300 (CN); ZHANG, Mengjun, Beijing 101300 (CN); YAN, Luping, Beijing 101300 (CN); ZHANG, Chen, Beijing 101300 (CN); CHANG, Yuan, Beijing 101300 (CN); WU, Juntao, Beijing 101300 (CN)
(74) Representative: Maiwald GmbH
(86) International application number: PCT/CN2023/087379
(87) International publication number: WO 2023/202409

(57) **Abstract**

An under vehicle body frame assembly, comprising: a frame body (10); a foot rest plate (20), which is connected to one side of the frame body; and a rear cross beam (30), which is connected to the side of the frame body away from the foot rest plate, wherein the frame body, the foot rest plate and the rear cross beam are integrally formed. Further provided is a vehicle comprising the under vehicle body frame assembly. When the frame body resists an external impact force, the foot rest plate and the rear cross beam may assist the frame body to resist a certain impact force, and further may disperse the transmission of the force, such that the impact force resistance capability of the under vehicle body frame assembly is improved, thereby improving the safety of the under vehicle body frame assembly.

## Description

### CROSS-REFERENCE TO RELATED APPLICATIONS

The present application is based on and claims the priority of Chinese patent application No. 202210400700.4, filed on April 17, 2022, the entire contents of which are hereby incorporated into the present application by reference.

### FIELD

The present application relates to the technical field of vehicle manufacturing, and in particular to a lower vehicle body frame assembly and a vehicle.

### BACKGROUND

With the increasing popularity of vehicles, people's requirements for vehicle safety are getting higher and higher. A front floor module, as a core member of the vehicles, together with a front engine compartment module and the rear floor module, forms a lower body structure of the vehicles. In the front floor module of the related art, a main longitudinal beam, a main cross beam and an internal beam usually adopt a split-type design, so that when the vehicle is in a collision, the integrity of the front floor module is weak, which is easy to deform or even disintegrate, resulting in defects in safety performance.

### SUMMARY

Embodiments of the present application provide a lower vehicle body frame assembly and a vehicle, aiming at solving the problem of low safety of the lower vehicle body frame assembly in the vehicle.

Embodiments of a first aspect of the present application provide a lower vehicle body frame assembly for a vehicle. The lower vehicle body frame assembly includes: a frame body; a footrest plate coupled to a side of the frame body; and a rear cross beam coupled to a side of the frame body away from the footrest plate. The frame body, the footrest plate and the rear cross beam are integrally formed.

According to implementations of the first aspect of the present application, the frame body includes a side-impact cross beam and a front cross beam arranged side by side and spaced along a length direction of the frame body, the footrest plate is coupled to a side of the side-impact cross beam away from the front cross beam, and the rear cross beam is coupled to a side of the front cross beam away from the side-impact cross beam.

According to any of the foregoing implementations of the first aspect of the present application, the front cross beam includes a first front cross beam and a second front cross beam, the first front cross beam and the side-impact cross beam are integrated, and the rear cross beam is coupled to a side of the second front cross beam away from the side-impact cross beam.

According to any of the foregoing implementations of the first aspect of the present application, the first front cross beam and the side-impact cross beam are a same cross beam, and the side-impact cross beam is configured to bear a side-impact load.

According to any of the foregoing implementations of the first aspect of the present application, the side-impact cross beam is provided with a coupling projection configured to couple to a seat, and the coupling projection is integrally formed with the side-impact cross beam and protruded from an upper surface of the side-impact cross beam.

According to any of the foregoing implementations of the first aspect of the present application, the rear cross beam includes a second-row front cross beam, a second-row rear cross beam and a third-row front cross beam arranged side by side and spaced along the length direction, and the second-row rear cross beam and the third-row front cross beam are integrated.

According to any of the foregoing implementations of the first aspect of the present application, the lower vehicle body frame assembly further includes: a side longitudinal beam coupled to at least one side of the side-impact cross beam in a width direction of the lower vehicle body frame assembly; and a sill beam including a first portion and a second portion. The first portion is coupled to the side longitudinal beam and is integrally formed with the side longitudinal beam, the side-impact cross beam and the rear cross beam, and the second portion is detachably coupled to a side of the first portion away from the side longitudinal beam.

According to any of the foregoing implementations of the first aspect of the present application, the lower vehicle body frame assembly further includes: a sliding rail box arranged at the first portion and is integrally formed with the first portion, the side-impact cross beam and the front cross beam. The sliding rail box is configured to bear a sliding door driver.

According to any of the foregoing implementations of the first aspect of the present application, the lower vehicle body frame assembly further includes an avoidance channel configured to avoid the sliding door driver. The avoidance channel is formed by a recess of the sill beam.

According to any of the foregoing implementations of the first aspect of the present application, the lower vehicle body frame assembly further includes a rear torsion box coupled between the side longitudinal beam and the rear cross beam and is integrally formed with the side longitudinal beam and the rear cross beam.

According to any of the foregoing implementations of the first aspect of the present application, the rear torsion box includes a body portion and a protruding portion formed by extending from the body portion, and the protruding portion is arranged to protrude from the cross beam in a height direction.

According to any of the foregoing implementations of the first aspect of the present application, the rear torsion box further includes a plurality of reinforcing portions embedded in the protruding portion, and the plurality of reinforcing portions are crossed in the protruding portion.

According to any of the foregoing implementations of the first aspect of the present application, the lower vehicle body frame assembly further includes a front torsion box coupled to at least one side of the footrest plate in a width direction of the frame body, and the front torsion box and the footrest plate are integrally formed.

According to any of the foregoing implementations of the first aspect of the present application, the lower vehicle body frame assembly further includes a coupling structure arranged at a side of the footrest plate facing away from the body of the lower vehicle body frame assembly and is integrally formed with the footrest plate; and a front longitudinal beam inserted on a side of the coupling structure facing away from the footrest plate.

According to any of the foregoing implementations of the first aspect of the present application, the lower vehicle body frame assembly further includes a front-row small longitudinal beam coupled between the footrest plate and the frame body. The front longitudinal beam and the front-row small longitudinal beam are at least partially aligned along a length direction of the lower vehicle body frame assembly.

According to any of the foregoing implementations of the first aspect of the present application, the frame body includes a side-impact cross beam, and the front-row small longitudinal beam is coupled between the side-impact cross beam and the footrest plate.

According to any of the foregoing implementations of the first aspect of the present application, the lower vehicle body frame assembly further includes a rear-row small longitudinal beam coupled between the frame body and the rear cross beam, and the sliding rail box and the rear-row small longitudinal beam are integrally formed.

According to any of the foregoing implementations of the first aspect of the present application, the lower vehicle body frame assembly further includes a heat dissipation component configured to dissipate heat from a battery of the vehicle, and mounted on a lower surface of the frame body.

Embodiments of a second aspect of the present application also provide a vehicle, which includes a lower vehicle body frame assembly of any of embodiments of the first aspect.

According to any of the foregoing implementations of the second aspect of the present application, the vehicle further includes a front engine compartment assembly arranged at a side of the footrest plate facing away from the frame body; and/or, the vehicle further includes a rear floor assembly arranged at a side of the rear cross beam facing away from the frame body.

In the lower vehicle body frame assembly provided by embodiments of the present application, the lower vehicle body frame assembly includes a frame body, a footrest plate and a rear cross beam. When the vehicle is involved in a collision, the frame body is used to resist an external impact force. According to embodiments of the present application, the footrest plate and the rear cross beam are integrally formed on the frame body, and the footrest plate and the rear cross beam are respectively arranged at two sides of the frame body; when the frame body resists the external impact force, the footrest plate and the rear cross beam may assist the frame body to resist a certain impact force, and may disperse force transmission at the same time, thus improving resistance to the impact force of the lower vehicle body frame assembly, reducing the overall deformation of the front floor, and improving the safety of the lower vehicle body frame assembly.

### BRIEF DESCRIPTION OF THE DRAWINGS

Other features, objects and advantages of the present application will become more apparent by reading the following detailed description of non-limiting embodiments with reference to the accompanying drawings, in which the same or similar reference numerals indicate the same or similar features.
FIG. 1 is a structural schematic diagram of a lower vehicle body frame assembly provided by an embodiment of the present application;
FIG. 2 is a schematic structural view of a lower vehicle body frame assembly provided by an embodiment of the present application from another perspective;
FIG. 3 is a schematic structural view of a lower vehicle body frame assembly provided by another embodiment of the present application;
FIG. 4 is a structural schematic diagram of a lower vehicle body frame assembly provided by yet another embodiment of the present application;
FIG. 5 is a partially enlarged structural diagram of FIG. 4;
FIG. 6 is an enlarged structural diagram of FIG. 4 in another embodiment;
FIG. 7 is an enlarged structural diagram of FIG. 4 in yet another embodiment;
FIG. 8 is a schematic structural view of a lower vehicle body frame assembly provided by an embodiment of the present application from yet another perspective;
FIG. 9 is a schematic structural view of a lower vehicle body frame assembly provided by an embodiment of the present application from still another perspective;
FIG. 10 is a partially enlarged structural diagram of FIG. 1; and
FIG. 11 is an exploded schematic diagram of FIG. 3.

Reference numerals:
10 frame body; 11 side-impact cross beam; 111 coupling projection; 12 front cross beam; 121 first front cross beam; 122 second front cross beam; 13 reinforcing rib; 131 main reinforcing rib; 132 auxiliary reinforcing rib;
20 footrest plate;
30 rear cross beam; 31 second-row front cross beam; 32 second-row rear cross beam; 33 third-row rear cross beam;
40 side longitudinal beam; 41 first side longitudinal beam; 42 second side longitudinal beam;
50 sill beam; 51 first portion; 511 first upper flange; 512 first lower flange; 52 second portion; 521 second upper flange; 53 body; 531 first body; 532 second body; 54 reinforcing rib component; 541 first reinforcing rib; 542 second reinforcing rib; 55 accommodating cavity; 551 first accommodating cavity; 552 second accommodating cavity; 56 first surface; 57 second surface;
61 sliding rail box; 62 avoidance channel; 621 first channel; 622 second channel;
71 rear torsion box; 711 body portion; 712 protruding portion; 713 reinforcing portion; 72 front torsion box; 721 first front torsion box; 722 second front torsion box;
80 coupling structure; 81 first coupling structure; 82 second coupling structure;
91 front-row small longitudinal beam; 911 first front-row small longitudinal beam; 912 second front-row small longitudinal beam; 92 rear-row small longitudinal beam; 921 first section; 922 second section;
101 front longitudinal beam; 101a first front longitudinal beam; 101b second front longitudinal beam; 102 coupling beam; 103 rear longitudinal beam; 104 heat dissipation component.

### DETAILED DESCRIPTION

Features and example embodiments of various aspects of the present application will be described in detail below. In the following detailed description, numerous specific details are set forth in order to provide a thorough understanding of the present application. However, it will be apparent to one skilled in the art that the present application may be practiced without some of these specific details. The following description of embodiments is only to provide a better understanding of the present application by showing examples of the present application. In the drawings and the following description, at least some well-known structures and techniques are not illustrated in order to avoid unnecessarily obscuring the present application. Moreover, for clarity, the dimensions of some structures may be exaggerated. Furthermore, the features, structures or characteristics described below may be combined in one or more embodiments in any suitable manner.

In the description of the present application, it should be noted that unless otherwise specified, "a plurality of" means more than two. The orientation or positional relationship indicated by the terms such as "upper", "lower", "left", "right", "inner" and "outer" are only for the convenience of describing the present application and simplifying the description, and do not indicate or imply that the devices or elements referred to must have a specific orientation, be constructed and operated in a specific orientation, which thus cannot be understood as limitations of the present application. In addition, the terms "first", "second" and so on are only used for descriptive purposes and cannot be understood as indicating or implying relative importance.

The directional words appearing in the following description are all directions illustrated in the figures, and are not intended to limit the specific structure of embodiments of the present application. In the description of the present application, it should also be noted that unless otherwise specified and limited, the terms "mount" and "couple" should be broadly understood, for example, they may be fixed connection, detachable connection or integrated connection; or may direct connection or indirect connection. For those skilled in the art, the specific meanings of the above terms in the present application may be understood according to the specific circumstances.

With the rapid development of automobile industry, automobile has become one of the indispensable means of transportation for people to travel. The number of automobiles is increasing year by year. With the increasing popularity of automobiles, the manufacturing and design of automobile parts have brought rapid development.

With the increasing popularity of electric vehicles in people's lives, people pay more and more attention to the performance of electric vehicle parts.

Based on the above considerations, in order to improve the resistance stress of the lower vehicle body frame assembly when it is subjected to a side impact, the inventor designs a lower vehicle body frame assembly through in-depth research, and by increasing the thickness of the rear torsion box, the lower vehicle body frame assembly may generate stronger resistance stress when the vehicle collides, to resist an external impact force, which has higher safety performance.

In the traditional fuel vehicle, because of the large layout space of the vehicle body, the loads of frontal collision, side collision and rear collision may be borne by different parts. In the electric vehicle, because a battery pack needs to be arranged under the front floor of the electric vehicle, the lower vehicle body frame assembly has become the most important stress structure on the vehicle body and plays an important role in the performance of the vehicle body.

Based on the above considerations, in order to improve the stress stability of the front floor and the performance of the vehicle body, the inventor designs a lower vehicle body frame assembly through in-depth research. By configuring the footrest plate, the rear cross beam and the frame body into an integral structure, the overall strength of the lower vehicle body frame assembly is improved, so that the lower vehicle body frame assembly may better withstand the impact force transmitted by frontal collision, side collision and rear collision, thus improving the structural stability and safety performance of the vehicle body.

The lower vehicle body frame assembly and the vehicle disclosed in embodiments of the present application may be applied to but not limited to electric vehicles, and may be also applied to new energy vehicles such as hydrogen energy vehicles and fuel vehicles. The following description is based on an example that the vehicle is an electric vehicle.

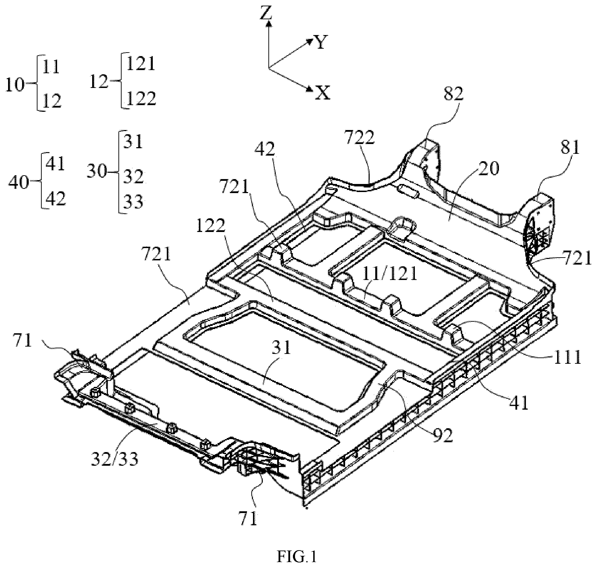

In order to better understand the present application, the lower vehicle body frame assembly and the vehicle according to embodiments of the present application will be described in detail with reference to FIGS. 1 to 11.

FIG. 1 is a structural schematic diagram of a lower vehicle body frame assembly provided by an embodiment of the present application.

As illustrated in FIG. 1, the lower vehicle body frame assembly provided by an embodiment of the present application is used for a vehicle. The lower vehicle body frame assembly includes a frame body 10, a footrest plate 20 and a rear cross beam 30. The footrest plate 20 is coupled to a side of the frame body 10. The rear cross beam 30 is coupled to a side of the frame body 10 away from the footrest plate 20. The frame body 10, the footrest plate 20 and the rear cross beam 30 are integrally formed.

In the lower vehicle body frame assembly provided by embodiments of the present application, the lower vehicle body frame assembly includes the frame body 10, the footrest plate 20 and the rear cross beam 30. When the vehicle is involved in a collision, the frame body 10 is used to resist an external impact force. In embodiments of the present application, the footrest plate 20 and the rear cross beam 30 are integrally formed on the frame body 10, and the footrest plate 20 and the rear cross beam 30 are respectively arranged at two sides of the frame body 10. When the frame body 10 resists the external impact force, the footrest plate 20 and the rear cross beam 30 may assist the frame body 10 to resist a certain impact force, thus improving the resistance to the impact force of the lower vehicle body frame assembly, reducing the deformation of the lower vehicle body frame assembly, and improving the safety of the lower vehicle body frame assembly.

In some embodiments, the frame body 10 may be a part configured to bear a side-impact load of the vehicle. The footrest plate 20 and the rear cross beam 30 are arranged at two sides of the frame body 10 along a length direction of the frame body 10 (which is Y direction in FIG. 1), and the length direction is a forward and/or backward direction of the vehicle. The footrest plate 20 and the rear cross beam 30 may assist the frame body 10 to bear the load in a front-rear direction, so that the frame body 10 is not easily deformed when bearing the front-rear load, improving the safety of the lower vehicle body frame assembly.

The footrest plate 20 is a plate-like structure in the lower vehicle body frame assembly, which is configured for the driver and passenger in the automobile to put their feet on, to make the driver and passenger in a more comfortable posture to improve the driving comfort.

The rear cross beam 30 is a cross beam configured for assembly of a rear seat, and the rear seat may be arranged on the rear cross beam 30. The rear seat may include a second-row seat and/or a third-row seat.

In some embodiments, please continue to refer to FIG. 1, the frame body 10 includes a side-impact cross beam 11 and a front cross beam 12 arranged side by side and spaced along the length direction of the frame body 10. The footrest plate 20 is coupled to a side of the side-impact cross beam 11 away from the front cross beam 12, and the rear cross beam 30 is coupled to a side of the front cross beam 12 away from the side-impact cross beam 11.

In some embodiments, the frame body 10 includes a side-impact cross beam 11 and a front cross beam 12, so that a front seat (i.e., a first-row seat) may be mounted on the frame body 10. When the frame body 10 includes the side-impact cross beam 11 and the front cross beam 12, the footrest plate 20 is arranged close to the side-impact cross beam 11, and the rear cross beam 30 is arranged close to the front cross beam 12, so that the distance between the front seat and the rear seat may be reduced.

In order to mount the seat, a set of seat cross beams usually includes two cross beams in the front-rear direction. For example, a front-seat cross beam 12 includes a first front cross beam 121 and a second front cross beam 122, and the front seat is mounted on the first front cross beam 121 and the second front cross beam 122.

In some embodiments, the first front cross beam 121 and the side-impact cross beam 11 are integrated, and the rear cross beam 30 is coupled to a side of the second front cross beam 122 away from the side-impact cross beam 11. In these embodiments, the first front cross beam 121 and the side-impact cross beam 11 are a same cross beam. On the one hand, the side-impact cross beam 11 may bear the side-impact load, and on the other hand, the front seat may also be mounted on the side-impact cross beam 11, which may reduce the overall occupied space of the side-impact cross beam 11 and the front cross beam 12 to save the space.

In some embodiments, please continue to refer to FIG. 1, the side-impact cross beam 11 is provided with a coupling projection 111 configured to couple to a seat. The coupling projection 111 is integrally formed with the side-impact cross beam 11 and protrudes from an upper surface of the side-impact cross beam 11.

In these embodiments, the coupling projection 111 configured to couple to the front seat is integrated on the side-impact cross beam 11, which, compared with detachably mounting a bracket configured to couple to the front seat on the side-impact cross beam 11, may not only improve the mounting efficiency of the lower vehicle body frame assembly, but also improve the stability of the relative position of the coupling projection 111 and the side-impact cross beam 11, thus improving the stability of the relative position of the front seat and the side-impact cross beam 11.

In the present application, "up" and "down" are defined when the lower vehicle body frame assembly of the vehicle is in use, that is, "up" and "down" in the present application are the relative positional relationship when the vehicle is on the ground, where "up" is the side relatively facing away from the ground, and "down" is the side relatively close to the ground.

A plurality of coupling projections 111 may be provided, and the plurality of coupling projections 111 are spaced along the width direction (that is, X direction in FIG. 1) of the frame body 10 on the side-impact cross beam 11 for mounting a plurality of front seats. The width direction of the frame body 10 may be a left-right direction of the vehicle.

The rear cross beam 30 may be arranged in various ways. When the vehicle includes two rows of seats, the rear cross beam 30 may be a second-row cross beam, which includes a second-row front cross beam 31 and a second-row rear cross beam 32. The second-row front cross beam 31 and the second-row rear cross beam 32 are configured to mount a second row seat.

In other embodiments, the vehicle includes three rows of seats, then the rear cross beam 30 may include a second-row cross beam and a third-row front cross beam 33.

In these embodiments, the second-row cross beam and the third-row front cross beam 33 are integrally formed on the frame body 10, which may further improve the structural stability of the frame body 10, enable the lower vehicle body frame assembly to bear a large impact force, and further improve the safety performance of the lower vehicle body frame assembly.

In some embodiments, the rear cross beam 30 further includes a third-row front cross beam 33, and a second-row seat cross beam includes a second-row front cross beam 31 and a second-row rear cross beam 32 arranged side by side and spaced along the length direction, and the second-row rear cross beam 32 and the third-row front cross beam 33 are integrated.

In these embodiments, the second-row rear cross beam 32 and the third-row front cross beam 33 are integrated, that is, the second-row rear cross beam 32 and the third-row front cross beam 33 are the same cross beam, which may reduce the space occupied by the lower vehicle body frame assembly.

In some embodiments, please continue to refer to FIG. 1, the lower vehicle body frame assembly further includes a side longitudinal beam 40 coupled to at least one side of the side-impact cross beam 11 in the width direction. For example, the side longitudinal beam 40 includes a first side longitudinal beam 41 and a second side longitudinal beam 42, and the first side longitudinal beam 41 and the second side longitudinal beam 42 are coupled to two sides of the side-impact cross beam 11 in the width direction. In some embodiments, the side longitudinal beam 40 is also coupled to the rear cross beam 30. In some embodiments, the side longitudinal beam 40 is also coupled to the second front cross beam 122. In these embodiments, the side longitudinal beam 40, the side-impact cross beam 11, the second front cross beam 122 and the rear cross beam 30 are combined to form a frame structure, which may bear a large impact force of a collision.

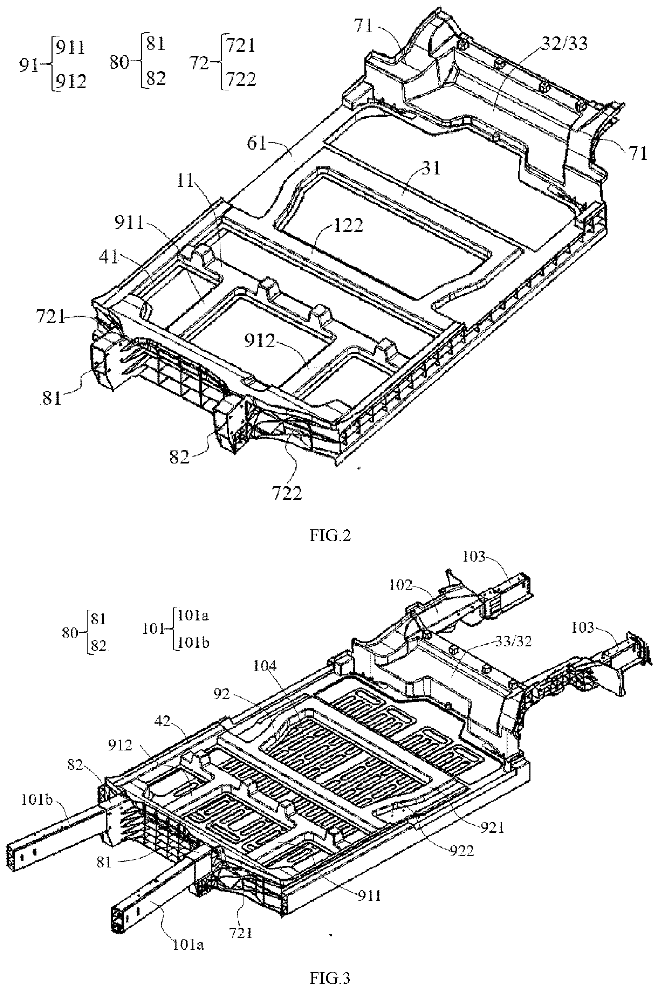

Please refer to FIG. 2, and FIG. 2 is a schematic structural view of the lower vehicle body frame assembly provided by an embodiment of the present application from another perspective.

As illustrated in FIGS. 1 and 2, in some embodiments, the lower vehicle body frame assembly further includes a front torsion box 72. The front torsion box 72 is coupled to at least one side of the footrest plate 20 in the width direction of the frame body 10, and the front torsion box 72 and the footrest plate 20 are integrally formed. For example, when the frame body 10 includes the side longitudinal beam 40, the front torsion box 72 is coupled between the footrest plate 20 and the side longitudinal beam 40.

In these embodiments, the front torsion box 72 is a structure configured to transmit a front collision force in the lower vehicle body frame assembly, and is mainly configured to associate with the side longitudinal beam 40, the footrest plate 20 and other structural members. Upon a collision accident of the vehicle, the front torsion box 72 bears a large impact force and transmits the acting force to the surrounding parts such as the footrest plate 20. The front torsion box 72 and the footrest plate 20 are integrally formed, so that the lower vehicle body frame assembly has higher overall strength, and the front torsion box 72 may better transmit the acting force, so that the lower vehicle body frame assembly may better bear the impact force transmitted by the frontal collision and the side collision, and has better structural stability, which is beneficial to improving the safety performance of the vehicle body. In addition, due to the integrally formed structure, the assembly between parts is reduced, and the instability of assembly tolerance between parts is reduced, which is beneficial to improving the overall dimensional accuracy of the lower vehicle body frame assembly.

In some embodiments, please continue to refer to FIGS. 1 and 2, the side longitudinal beam 40 includes a first side longitudinal beam 41 and a second side longitudinal beam 42. The front torsion box 72 includes a first front torsion box 721 and a second front torsion box 722 coupled to two sides of the footrest plate 20 in the width direction. The first front torsion box 721 is coupled between the first side longitudinal beam 41 and the footrest plate 20, and the second front torsion box 722 is coupled between the second side longitudinal beam 42 and the footrest plate 20.

Through the above arrangement, the first front torsion box 721 and the second front torsion box 722 are symmetrically arranged at two sides of the footrest plate 20 in the width direction, so that the first front torsion box 721 and the second front torsion box 722 may be located at a position where the lower vehicle body frame assembly is greatly deformed, and may better transmit the acting force, reduce the relative displacement between the first side longitudinal beam 41 and the second side longitudinal beam 42, which is beneficial to maintaining the structural stability of the lower vehicle body frame assembly.

In some embodiments, as illustrated in FIGS. 2 and 3, the lower vehicle body frame assembly further includes a coupling structure 80 and a front longitudinal beam 101. The coupling structure 80 is arranged on a side of the footrest plate 20 facing away from the lower vehicle body frame assembly body 53, and the coupling structure 80 and the footrest plate 20 are integrally formed. The coupling structure 80 is configured to couple the front longitudinal beam 101. For example, the front longitudinal beam 101 is inserted on a side of the coupling structure 80 facing away from the footrest plate 20.

In these embodiments, when the vehicle is subjected to a front collision force, the acting force may be transmitted to the footrest plate 20 through the front longitudinal beam 101 and the coupling structure 80. Because the coupling structure 80 and the footrest plate 20 are integrally formed, the transmission speed of the acting force may be improved, and the front collision force may be transmitted to the frame body 10 from the footrest plate 20, that is, the front collision force is shared by the front longitudinal beam 101, the footrest plate 20 and the frame body 10, so that the ability of the lower vehicle body frame assembly to bear the front collision force may be improved and the deformation of the lower vehicle body frame assembly may be improved. In addition, the front longitudinal beam 101 is inserted on the coupling structure 80, which may improve the mounting efficiency of the front longitudinal beam 101 and the coupling structure 80.

In some embodiments, please continue to refer to FIGS. 2 and 3, the coupling structure 80 is arranged at a coupling position of the front torsion box 72 and the footrest plate 20, so that the force applied to the coupling structure 80 by the front longitudinal beam 101 may be transmitted to the footrest plate 20 and the front torsion box 72 at the same time, further improving the ability of the lower vehicle body frame assembly to bear the front collision force and improving the deformation of the lower vehicle body frame assembly.

In some embodiments, please continue to refer to FIGS. 2 and 3, the coupling structure 80 includes a first coupling structure 81 and a second coupling structure 82. The front longitudinal beam 101 includes a first front longitudinal beam 101a and a second front longitudinal beam 101b. The first coupling structure 81 is arranged at a coupling position of the footrest plate 20 and the first front torsion box 721, and the second coupling structure 82 is arranged at a coupling position of the footrest plate 20 and the second front torsion box 722. The first front longitudinal beam 101a is inserted on the first coupling structure 81, and the second front longitudinal beam 101b is inserted on the second coupling structure 82. By arranging two groups of coupling structures 80 and front longitudinal beams 101, the stress of the lower vehicle body frame assembly is more balanced.

In some embodiments, please continue to refer to FIGS. 2 and 3, the lower vehicle body frame assembly further includes a front-row small longitudinal beam 91, and the front-row small longitudinal beam is coupled between the footrest plate 20 and the frame body 10 to improve the stability of the relative position between the footrest plate 20 and the frame body 10. In some embodiments, more than two front-row small longitudinal beams 91 may be provided, and the more than two front-row small longitudinal beams 91 are spaced in the width direction. When the frame body 10 includes the side-impact cross beam 11, the front-row small longitudinal beam 91 may be coupled between the side-impact cross beam 11 and the footrest plate 20.

In some embodiments, please continue to refer to FIGS. 2 and 3, the front longitudinal beam 101 and the front-row small longitudinal beam 91 are at least partially aligned in the length direction, that is, a projection of the front longitudinal beam 101 and a projection of the front-row small longitudinal beam 91 in the length direction are at least partially aligned, so that the acting force on the front longitudinal beam 101 may be directly transmitted to the small longitudinal beam through the footrest plate 20, the deformation of the front torsion box 72 may be improved, and the ability of the lower vehicle body frame assembly to bear the acting force may be enhanced.

In some embodiments, please continue to refer to FIGS. 2 and 3, the front-row small longitudinal beam 91 includes a first front-row small longitudinal beam 911 and a second front-row small longitudinal beam 912. The first front-row small longitudinal beam 911 and the first front longitudinal beam 101a are at least partially aligned in the length direction, and the second front longitudinal beam 912 and the second front longitudinal beam 101b are at least partially aligned in the length direction to further improve the structural strength of the lower vehicle body frame assembly.

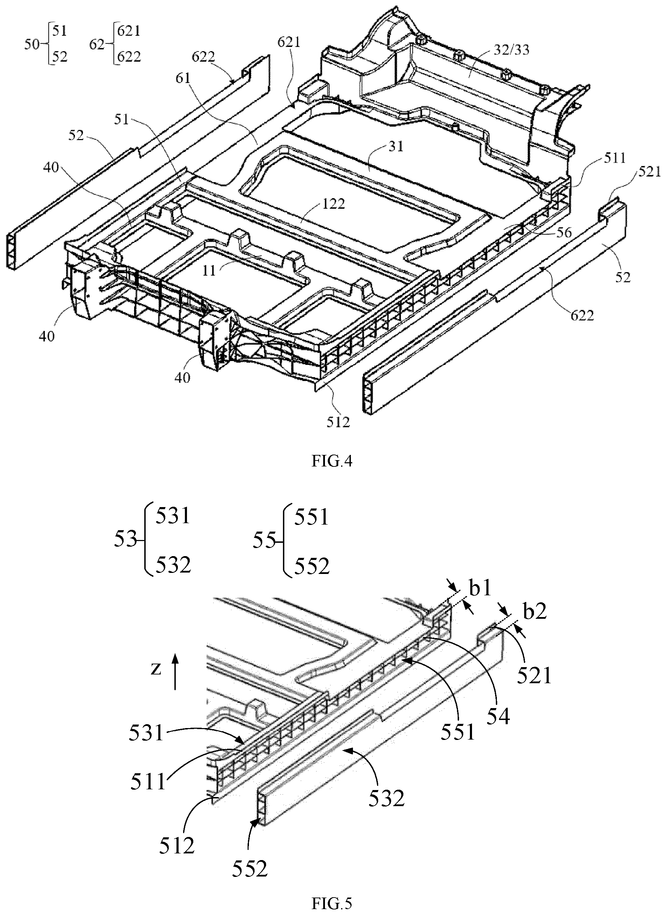

In some embodiments, as illustrated in FIG. 4, the lower vehicle body frame assembly further includes a sill beam 50. The sill beam 50 includes a first portion 51 and a second portion 52. The first portion 51 is coupled to the side longitudinal beam 40 and integrally formed with the side longitudinal beam 40, the side-impact cross beam 11 and the rear cross beam 30, and the second portion 52 is detachably coupled to a side of the first portion 51 away from the side longitudinal beam 40.

In these embodiments, the first portion 51 of the sill beam 50 is integrally arranged on the frame body 10, which may further improve the structural strength of the frame body 10 and improve the ability of the lower vehicle body frame assembly to resist the impact force of side collision. The first portion 51 integrally formed into the frame body 10 may also avoid the gap between the first portion 51 and the frame body 10. When the battery is arranged on the frame body 10, the frame body 10 may provide a more closed, safer and more stable environment for the battery.

In addition, the second portion 52 of the sill beam 50 is detachably coupled to the first portion 51. When the vehicle is impacted on the side, the second portion 52 bears the collision force first, so that the first portion 51 and the frame body 10 may be protected. The second portion 52 is detachably coupled with the first portion 51, so that only the second portion 52 needs to be replaced when the second portion 52 is damaged and the first portion 51 is not damaged, which greatly saves the maintenance cost.

In some embodiments, there are two sill beams 50, and the two sill beams 50 are respectively arranged on two sides of the side-impact cross beam 11.

In some embodiments, as illustrated in FIGS. 1 to 5, the first portion 51 is provided with a first upper flange 511 and a first lower flange 512 on two sides in the height direction (that is Z direction in FIG. 1), and the second portion 52 is provided with a second upper flange 521 on at least one side in the height direction. The first upper flange 511 is fixed with the second upper flange 521, and the second sill body 53 is fixed with the first lower flange 512.

The height direction is defined by the position of the lower vehicle body frame assembly of the vehicle when the lower vehicle body frame assembly of the vehicle is in use, and the height direction in the present application is the direction perpendicular to the ground.

In these embodiments, a side of the first portion 51 along its own height direction is fixed with the second upper flange 521 of the second portion 52 through the first upper flange 511, and the other side is fixed with the second sill body 53 of the second portion 52 through the second lower flange. Two sides of the first portion 51 along its own height direction are fixed with the second portion 52, thus achieving more stable connection.

**In** some embodiments, a side of the second portion 52 facing away from the second upper flange 521 may also be provided with a second lower flange (not illustrated in the figure) configured to coupling to the first lower flange 512, so that the first upper flange 511 is fixed to the second upper flange 521, and the second lower flange is fixed to the first lower flange 512, to realize the fixation of the first portion 51 and the second portion 52, with simpler operation.

**In** some embodiments, as illustrated in FIG. 5, a thickness b1 of the first portion 51 along an arrangement direction of the first portion 51 and the second portion 52 is 2.5mm to 5 mm. A thickness b2 of the second portion 52 along the arrangement direction of the first portion 51 and the second portion 52 is 2 mm to 3 mm.

In these embodiments, the thickness b1 of the first portion 51 is set to 2.5 mm to 5mm, and the thickness b2 of the second portion 52 is set to 2mm to 3mm, so that the supporting performance and weight of the sill beam 50 component may be balanced, that is, the lightweight of the vehicle is balanced while satisfying the supporting performance, which makes the overall comprehensive performance more superior.

In some embodiments, please continue to refer to FIG. 5, at least one of the first portion 51 and the second portion 52 includes a body 53 and a reinforcing rib component 54 arranged on the body 53. The body 53 includes an accommodating cavity 55, and the reinforcing rib component 54 is arranged in the accommodating cavity 55 and integrally formed with the body 53.

In these embodiments, the weight of the body 53 may be reduced by provision of the accommodating cavity 55, and the structural strength of the body 53 may be improved by arranging the reinforcing rib component 54 in the accommodating cavity 55. The reinforcing rib component 54 integrally formed with the body 53 may further improve the strength and enhance the integration of the lower vehicle body frame assembly.

In some embodiments, the second portion 52 includes a second body 532 and a second reinforcing rib component. The second body 532 includes a second accommodating cavity 552, the second reinforcing rib component is arranged in the second accommodating cavity 552, and the second body 532 and the second reinforcing rib component are integrally formed.

In some embodiments, please continue to refer to FIG. 5, the first portion 51 includes a first body 531 and a first reinforcing rib component. The first body 531 has a first accommodating cavity 551, and an opening of the first accommodating cavity 551 faces the side facing away from the frame body 10. The first reinforcing rib component is arranged in the first accommodating cavity 551 and integrally formed with the first body 531.

In these embodiments, the first body 531 has the first accommodating cavity 551, and the first reinforcing rib component is arranged in the first accommodating cavity 551, so that the overall strength of the first portion 51 may be increased by the first reinforcing rib component while reducing the weight. The opening of the first accommodating cavity 551 in the first body 531 is located at the side facing away from the frame body 10, and the opening may be covered by the second portion 52, thus the aesthetics may be balanced while reducing the weight. The first reinforcing rib component integrally formed with the first body 531 may further enhance the strength and enhance the integration of the lower vehicle body frame assembly.

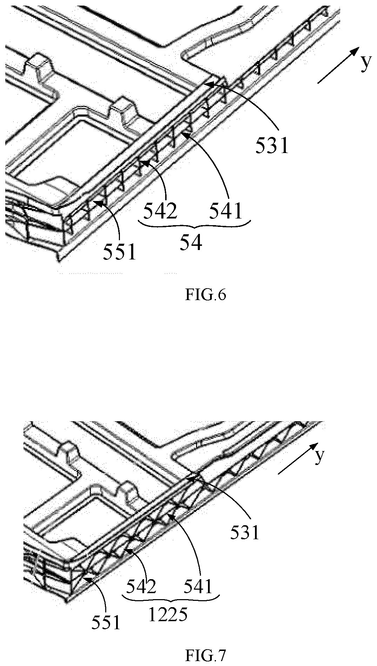

In some embodiments, as illustrated in FIGS. 5 and 6, the reinforcing rib component 54 includes a plurality of first reinforcing ribs 541 and a plurality of second reinforcing ribs 542, and the plurality of first reinforcing ribs 541 and the plurality of second reinforcing ribs 542 are crossed.

In these embodiments, by arranging the first reinforcing ribs 541 and the second reinforcing ribs 542 in a crossed manner, the structural strength of the body 53 may be strengthened in more directions, so that the overall strength is higher.

In some embodiments, please continue to refer to FIGS. 5 and 6, the first reinforcing rib 541 extends along the length direction to improve the structural strength of the body 53 in the length direction. One or a plurality of first reinforcing ribs 541 may be provided. For example, the plurality of the first reinforcing ribs 541 are distributed and spaced along the height direction to further improve the structural strength of the body 53.

In some embodiments, the body 53 includes a side wall enclosing the accommodating cavity 55. When the second reinforcing rib 542 may be coupled between the side wall and the first reinforcing rib 541, and/or, the second reinforcing rib 542 may be coupled between two adjacent first reinforcing ribs 541, thus the structural strength of the body 53 may be further improved.

In some embodiments, the second reinforcing rib 542 and the first reinforcing rib 541 are arranged perpendicular to each other, so that the second reinforcing rib 542 and the first reinforcing rib 541 may be enclosed to form a rectangle, so that the second reinforcing rib 542 and the first reinforcing rib 541 and/or the side wall support each other and form a relatively stable structure, to enhance the structural strength of the body 53.

In other embodiments, the second reinforcing rib 542 intersects with the first reinforcing rib 541, and the second reinforcing rib 542 and the first reinforcing rib 541 and/or the side wall are enclosed to form a quadrilateral other than the rectangle, such as a rhombus or a trapezoid.

In some embodiments, referring to FIGS. 5 and 7, the first reinforcing rib 541 and the second reinforcing rib 542 are sequentially coupled end to end to form a triangle, so that a relatively stable structure may be formed to enhance the structural strength of the body 53.

In some embodiments, please continue to refer to FIGS. 1 to 4, the lower vehicle body frame assembly further includes a sliding rail box 61 arranged on the first portion 51 and integrally formed with the first portion 51, the side-impact cross beam 11 and the front cross beam 12. The sliding rail box 61 is configured to bear a sliding door driver.

In these embodiments, the sliding rail box 61 is configured to carry the sliding door driver, and the sliding door driver is configured to realize the sliding of a sliding door in the vehicle. The sliding rail box 61 is integrally formed with the first portion 51, the side-impact cross beam 11 and the front cross beam 12, which may reduce the number of parts in the lower vehicle body frame assembly of the vehicle, improve the efficiency of manufacturing parts, omit the mounting steps and reduce the production time; on the other hand, when the sliding rail box 61 is an independent structure, the sliding rail box 61 has a coupling edge configured to couple to other parts, and the part configured to mount sliding rail box 61 (such as the first portion 51 and the frame body 10) needs to reserve an mounting space for the coupling edge, so the size of the part will be increased, while the integrated design may omit the above mounting space, thus saving materials, further saving production costs, reducing weight and helping to save energy of the vehicle.

In some embodiments, please continue to refer to FIG. 4, the lower vehicle body frame assembly further includes an avoidance channel 62 configured to avoid the sliding door driver, and the avoidance channel 62 is formed by a recess of the sill beam 50. In some embodiments, when the sill beam 50 includes the first portion 51 and the second portion 52, the avoidance channel 62 includes a first channel 621 formed by a recess of the first portion 51 and a second channel 622 formed by a recess of the second portion 52.

In these embodiments, an avoidance channel 62 configured to avoid the sliding door driver is formed in an area of the sill beam 50 corresponding to the sliding rail box 61. The avoidance channel 62 passes through the sill beam 50 from the side of the sill beam 50 facing away from the frame body 10 to the side facing the frame body 10 (that is, the X direction in FIG. 1), and the avoidance channel 62 is formed by recessing an upper surface of the sill beam 50 downwards.

In some embodiments, a depth of the avoidance channel 62 is 25mm to 55mm, so that the sliding door driver may be fully accommodated. At the same time, controlling the depth in the range of 25mm to 55mm may facilitate the mounting of the sliding door and the sliding rail driver, and avoid the situation that the sliding rail driver is far away from the sliding door due to an excessive depth. The depth of the avoidance channel 62 is a depth of the avoidance channel 62 in the height direction.

In some embodiments, please continue to refer to FIG. 4, the sill beam 50 has a first surface 56 facing the avoidance channel 62 and parallel to the upper surface of the sliding rail box 61, and the first surface 56 is flush with, or, lower than the upper surface of the sliding rail box 61. Therefore, the sliding door driver may be in good contact with the upper surface of the sliding rail box 61, and the sliding door and the sliding door driver may be better fitted.

In these embodiments, the first surface 56 being lower than the upper surface of the sliding rail box 61 means that when the lower vehicle body frame assembly of the vehicle is in use, the first surface 56 is closer to the ground than the sliding rail box 61.

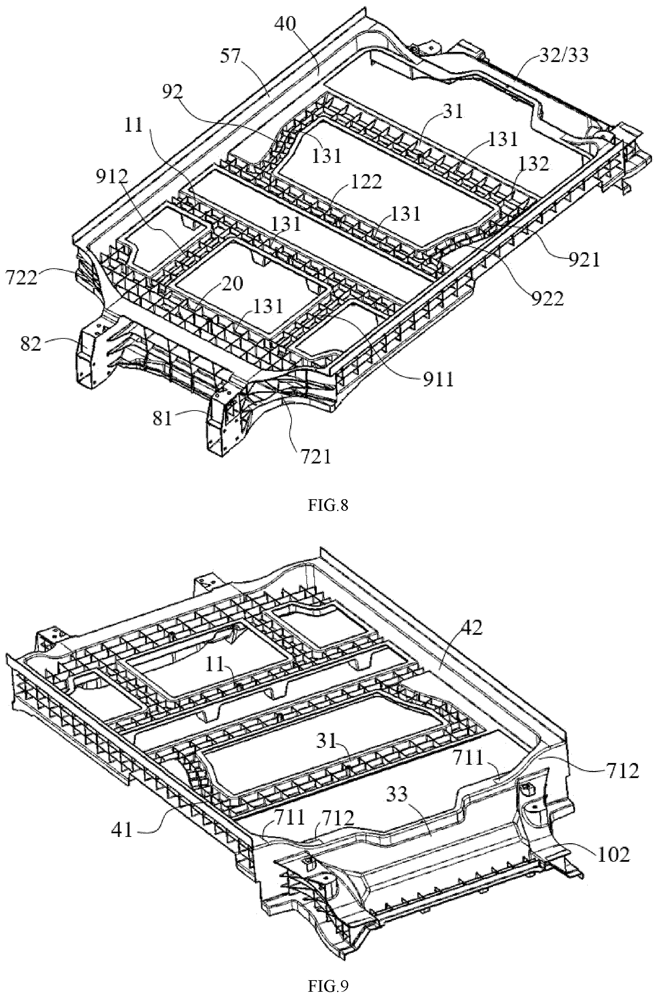

In some embodiments, as illustrated in FIGS. 4 and 8, the sill beam 50 has a second surface 57 facing away from the avoidance channel 62 and parallel to the first surface 56, and a distance between the second surface 57 and the first surface 56 is greater than a distance between the upper surface and the lower surface of the sliding rail box 61.

In these embodiments, on the premise of ensuring the bearing performance of the sliding rail box 61, setting the thickness of the sliding rail box 61 (that is, the distance between the upper surface and the lower surface of the sliding rail box 61) to be small may realize the lightweight of the lower vehicle body frame assembly, and further save the manufacturing cost and energy.

In some embodiments, please continue to refer to FIGS. 1 to 4, the lower vehicle body frame assembly further includes a rear-row small longitudinal beam 92, the rear-row small longitudinal beam 92 is coupled between the frame body 10 and the rear cross beam 30, and the sliding rail box 61 is integrally formed with the rear-row small longitudinal beam 92. For example, the frame body 10 includes a side-impact cross beam 11 and a second front cross beam 122, and the rear-row small longitudinal beam 92 is coupled between the second front cross beam 122 and the rear cross beam 30. The sliding rail box 61 is integrally formed with the second front cross beam 122, the rear cross beam 30 and the rear-row small longitudinal beam 92. In some embodiments, the sliding rail box 61 is integrally formed with the second front cross beam 122, the second-row front cross beam 31 and the rear-row small longitudinal beam 92. Moreover, the sliding rail box 61 is arranged in an avoiding cavity enclosed by the second front cross beam 122, the second-row front cross beam 31 and the rear-row small longitudinal beam 92.

In these embodiments, after the rear-row small longitudinal beam 92 are coupled to the second front cross beam 122 and the rear cross beam 30, the overall structure is more stable and the anti-collision ability is stronger. The sliding rail box 61 is integrally formed with the second front cross beam 122, the second-row front cross beam 31 and the rear-row small longitudinal beam 92, so that the sliding rail box 61 receive more support, to provide better support for the sliding door driver.

In some embodiments, as illustrated in FIGS. 1 to 4, the upper surface of the sliding rail box 61 is lower than the upper surfaces of the second front cross beam 122, the second-row front cross beam 31 and the rear-row small longitudinal beam 92.

In these embodiments, the upper surface of the sliding rail box 61 being lower than the upper surfaces of the second front cross beam 122, the second-row front cross beam 31 and the rear-row small longitudinal beam 92 means that the upper surface of the sliding rail box 61 is closer to the ground than the upper surfaces of the second front cross beam 122, the second-row front cross beam 31 and the rear-row small longitudinal beam 92 when the lower vehicle body frame assembly of the vehicle is in use.

In some embodiments, the distance between the upper surface of the sliding rail box 61 and the upper surfaces of the second front cross beam 122, the second-row front cross beam 31 and the rear-row small longitudinal beam 92 is the same as the thickness of the sliding rail driver, to facilitate the mounting of the sliding door and the sliding rail driver while reducing the influence of the sliding rail driver on the total thickness of the lower vehicle body frame assembly.

In some embodiments, please continue to refer to FIG. 8, in a direction approaching the footrest plate 20, the rear-row small longitudinal beam 92 includes a first section 921 and a second section 922 which are successively divided, and the second section 922 is obliquely arranged to form an avoiding portion configured to arrange the sliding rail box 61 between the second section 922 and the side longitudinal beam 40. In these embodiments, the second section 922 is arranged obliquely, which may make room for the arrangement of the sliding rail box 61.

In some embodiments, continue to refer to FIG. 8, the frame body 10 further includes a reinforcing rib 13. The reinforcing rib 13 is arranged on the footrest plate 20, the side-impact cross beam 11, the front cross beam 12 and the rear cross beam 30 to improve the structural strength of the frame body 10.

In some embodiments, the reinforcing rib 13 includes a main reinforcing rib 131 and an auxiliary reinforcing rib 132. The main reinforcing rib 131 has the same extension path as the side-impact cross beam 11, the front cross beam 12 or the rear cross beam 30 on which the main reinforcing rib is located, and the auxiliary reinforcing rib 132 intersects with the main reinforcing rib 131.

For example, the side-impact cross beam 11, the front cross beam 12 or the rear cross beam 30 are formed by extending in the width direction, and the main reinforcing rib 131 arranged on the side-impact cross beam 11, the front cross beam 12 or the rear cross beam 30 is formed by extending in the width direction, so that the main reinforcing rib 131 may strengthen the structural strength of the side longitudinal beam 40, the side-impact cross beam 11, the front cross beam 12 or the rear cross beam 30 where the main reinforcing rib 131 is located in their own extension direction, and may transmit the acting force along the extension path of the part where the main reinforcing rib 131 is located. The auxiliary ribs 132 may strengthen the structural strength of the structure where the auxiliary rib is located in other directions.

In some embodiments, as illustrated in FIG. 9, the lower vehicle body frame assembly further includes a rear torsion box 71, and the rear torsion box 71 is coupled between the side longitudinal beam 40 and the rear cross beam 30 and is integrally formed with the side longitudinal beam 40 and the rear cross beam 30. When the rear cross beam 30 includes the third-row front cross beam 33, the rear torsion box 71 may be coupled between the third-row front cross beam 33 and the side longitudinal beam 40. When the rear cross beam 30 includes the second-row rear cross beam 32, the rear torsion box 71 may be coupled between the second-row rear cross beam 32 and the side longitudinal beam 40.

The rear torsion box 71 is a structure configured to transmit the acting force in the lower vehicle body frame assembly. The rear torsion box 71 is coupled between the side longitudinal beam 40 and the third-row front cross beam 33, and is integrally formed with the side longitudinal beam 40 and the third-row front cross beam 33. When the vehicle is involved in a collision, the rear torsion box 71 bears a huge external impact force, and transmits the impact force to the third-row front cross beam 33, side longitudinal beam 40 and other members coupled to the rear torsion box 71, to generate a counter stress for resisting the impact force and ensure the integrity of the vehicle.

Arranging the rear torsion box 71 to be coupled between the side longitudinal beam 40 and the third-row front cross beam 33 may improve the integrity of the lower vehicle body frame assembly, and further greatly improve the side collision performance of the vehicle.

In some embodiments, the rear torsion box 71 includes a body portion 711 and a protruding portion 712 extending from the body portion 711, and the protruding portion 712 protrudes from the cross beam in the height direction. The arrangement of the protruding portion 712 strengthens the structural strength of the rear torsion box 71, so that it may generate greater counter stress when dealing with the side collision, and further makes up for the defect of insufficient side collision performance of the vehicle.

In some embodiments, the rear torsion box 71, the side-impact cross beam 11 and the side longitudinal beam 40 may be made of aluminum alloy, and the aluminum alloy may make the lower vehicle body frame assembly absorb the energy brought by the impact force through collapse and deformation when the lower vehicle body frame assembly is subjected to the impact force, which is beneficial to improving the safety performance of the lower vehicle body frame assembly.

In some embodiments, in the height direction, the protruding portion 712 extends from the body portion 711 toward a direction close to and/or away from an interior space of the vehicle.

The body portion 711 is oriented in the direction close to the interior space of the vehicle, that is, the body portion 711 is oriented in the direction close to the vehicle body in the height direction, that is, the protruding portion 712 may extend towards the interior of the vehicle body. The body portion 711 is oriented in a direction away from the interior space of the vehicle, that is, the body portion 711 is oriented in a direction close to a suspension and a wheel in the height direction, that is, the protruding portion 712 may extend in the direction of the suspension and the wheel.

However, in order to prevent the protruding portion 712 from occupying an interior space of the vehicle body and affecting the mounting of a control system and a drive system of the vehicle, the protruding portion 712 preferably extends in a direction away from the interior space of the vehicle.

In some embodiments of the present application, the side longitudinal beam 40, the side-impact cross beam 11 and the rear cross beam 30 together enclose a storage space, and the storage space is configured to place a battery. The protruding portion 712 protrudes from the surface of the side-impact cross beam 11 without protruding beyond a bottom surface of the battery.

Of course, as described in previous embodiments, the storage space may also be configured to place more than just the battery, but also may be configured to place the driving system and the control system of the vehicle.

The bottom surface of the battery is a side surface of the battery close to the suspension and wheel of the vehicle in the height direction. In these embodiments of the present application, by controlling an extension size of the protruding portion 712, the strength of the rear torsion box 71 may be improved without reducing the ground clearance of the lower vehicle body frame assembly, and the reliability of the lower vehicle body frame assembly may be improved.

In some embodiments, a surface of the protruding portion 712 protruding from the cross beam may be arranged to be flush with the bottom surface of the battery.

In some embodiments, the extension height of the protruding portion 712 is 60 mm to 0 mm.

In some embodiments, setting the extension height of the protruding portion 712 as 60mm to 0mm may balance the strength of the rear torsion box 71 and the ground clearance of the lower vehicle body frame assembly, so that the overall comprehensive performance is more superior.

In some embodiments, the side longitudinal beam 40 includes a first side longitudinal beam 41 and a second side longitudinal beam 42, and the first side longitudinal beam 41 and the second side longitudinal beam 42 are respectively arranged at two ends of the side-impact cross beam 11 in the width direction. There are two rear torsion boxes 71, one of the two rear torsion boxes 71 is coupled between the first side longitudinal beam 41 and the rear cross beam 30, and the other is coupled between the second side longitudinal beam 42 and the rear cross beam 30. In these embodiments of the present application, two ends of the rear cross beam 30 in the width direction are respectively coupled to the side longitudinal beam 40 through the respective rear torsion boxes 71, and the arrangement of the two rear torsion boxes 71 further improves the safety performance of the lower vehicle body frame assembly.

Meanwhile, in some embodiments of the present application, the number of side longitudinal beams 40 may also be set to three, four, five, etc. to strengthen the structural strength of the lower vehicle body frame assembly, which may be selected according to the actual situation.

In some embodiments, along a direction from a center of the rear cross beam 30 in the width direction to the side longitudinal beam 40, the height of the protruding portion 712 protruding from the rear cross beam 30 gradually increases.

The center of the rear cross beam 30 in the width direction refers to a midpoint of the rear cross beam 30 in its own extension direction. The direction from the center of the rear cross beam 30 in the width direction to the side longitudinal beam 40 may also be understood as a direction from the midpoint of the rear cross beam 30 to two ends of the rear cross beam 30 in its own extension direction.

The height of the protruding portion 712 protruding from the rear cross beam 30 gradually increases, which means that a surface of the protruding portion 712 away from the body portion 711 has a certain slope. It may be understood that a portion of the protruding portion 712 close to the side longitudinal beam has the largest thickness, so that the protruding portion 712 may bear the huge impact force generated when the collision of the vehicle, and may generate enough counter stress to resist this impact force. A portion of the protruding portion 712 away from the side longitudinal beam 40 has the smallest thickness, which may save material cost, reduce vehicle weight and save vehicle space.

In these embodiments, along a direction from the center of the rear cross beam 30 in the width direction to a longitudinal beam, the thickness variation of the protruding portion 712 may first increase and then decrease. That is to say, the thickness of the protruding portion 712 varies greatly at the portion close to the center of the rear cross beam 30, and the thickness varies slowly at the end close to the side longitudinal beam 40. In this way, the protruding portion 712 may form an arched structure, which further improves the performance of the protruding portion 712 in resisting side collision.

In some embodiments, the protruding portions 712 of the two rear torsion boxes 71 are coupled to each other. Accordingly, the body portions 711 of the two rear torsion boxes 71 may also be coupled to each other.

In these embodiments, it is possible that after the body portions 711 of the two rear torsion boxes 71 are coupled to form an integrally formed structure, the protruding portions 712 of the two rear torsion boxes 71 extend from the two body portions 711 respectively, and the opposite ends of the protruding portions 712 naturally transition and are integrally formed.

It is also possible that the body portions 711 of the two rear torsion boxes 71 are arranged in a split manner, the two protruding portions 712 extend from the two body portions 711 respectively and are coupled to the cross beam, and the opposite ends of the two protruding portions 712 naturally transition and are integrally formed.

In these embodiments, the two protruding portions 712 are coupled to each other, which may further increase the integration degree of the lower vehicle body frame assembly. When the vehicle collides on the side, the impact force may be conducted in a wider range through the two protruding portions 712, so that more parts in the lower vehicle body frame assembly may jointly resist the impact force, further improving the safety and reliability of the lower vehicle body frame assembly.

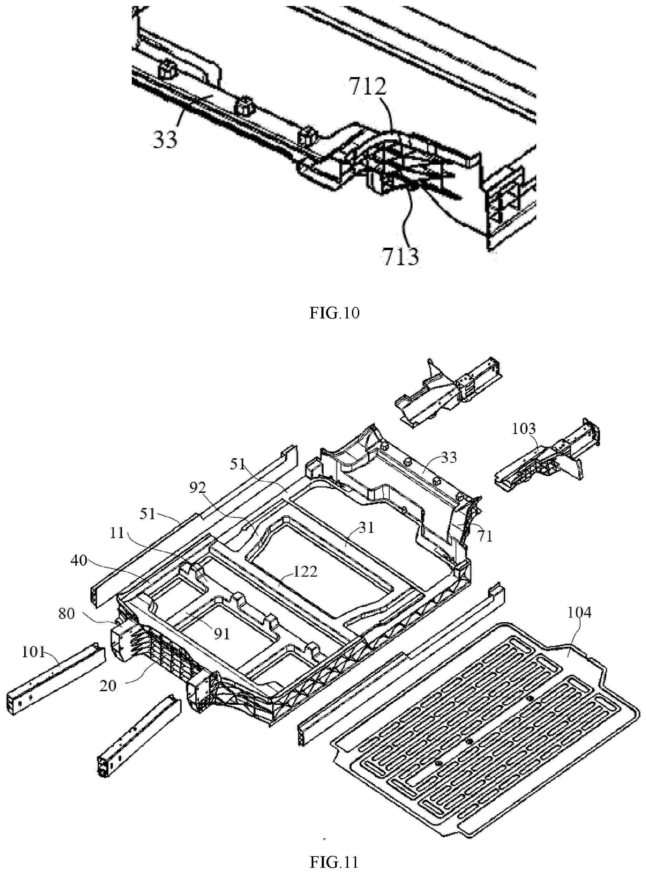

In some embodiments, as illustrated in FIG. 10, the rear torsion box 71 further includes a plurality of reinforcing portions 713 embedded in the protruding portion 712, and the plurality of reinforcing portions 713 are crossed in the protruding portions 712.

The reinforcing rib 13 may be in the form of a steel bar, a plate or a block. The reinforcing portion 713 is configured to increase the structural strength of the protruding portion 712. Because the reinforcing portions 713 are crossed in the protruding portion 712, the plurality of reinforcing portions 713 interact when a collision occurs, so that the protruding portion 712 may be prevented from being deformed and displaced too much, and the structural stability of the lower vehicle body frame assembly is improved.

In some embodiments, the reinforcing portion 713 may be embedded in the protruding portion 712 or may be exposed.

In some embodiments, as illustrated in FIGS. 9 and 10, the lower vehicle body frame assembly further includes a coupling beam 102 integrally formed with the rear torsion box 71, and the coupling beam 102 extends from the rear cross beam 30 in a direction away from the side longitudinal beam 40, and is configured to couple a rear floor assembly.

The coupling beam 102 is a coupling member between the lower vehicle body frame assembly and the rear floor assembly, and may also play the role of force transmission. The coupling beam 102 is coupled to the cross beam through the rear torsion box 71, and when the vehicle has a frontal collision, the impact force received by the rear floor assembly is transmitted to the lower vehicle body frame assembly through the coupling beam 102, and finally the impact force is dispersed by the rear torsion box 71 and resisted by the cross beam, longitudinal beam and other members, thus improving the safety performance of the vehicle.

In some embodiments, as illustrated in FIGS. 9 to 11, the lower vehicle body frame assembly further includes a rear longitudinal beam 103, and the rear longitudinal beam 103 is coupled to the coupling beam 102. When the vehicle bears the rear impact force, the rear impact force may be transmitted to the rear longitudinal beam 103, the coupling beam 102, the rear torsion box 71 and the side longitudinal beam 40 through the rear floor assembly, to improve the ability of the lower vehicle body frame assembly to bear the rear impact.

In some embodiments, the rear longitudinal beam 103 and the coupling beam 102 are detachably coupled. When the rear longitudinal beam 103 is damaged due to the rear impact force of the vehicle, only the rear longitudinal beam 103 may be repaired or replaced, thus reducing the maintenance cost of the vehicle.

In some embodiments, as illustrated in FIGS. 3 and 11, the lower vehicle body frame assembly further includes a heat dissipation component 104 configured to dissipate heat from a battery of the vehicle, and the heat dissipation component 104 is mounted on the lower surface of the frame body 10 to reduce the gap between the heat dissipation component 104 and the frame body 10, leaving enough space for the battery. In some embodiments, the heat dissipation component 104 may be directly welded to the lower surface of the frame body 10. The heat dissipation component 104 includes, for example, a first heat dissipation plate and a second heat dissipation plate, at least one of the first heat dissipation plate and the second heat dissipation plate is recessed to form a heat dissipation recess, and the first heat dissipation plate and the second heat dissipation plate are attached to each other so that the heat dissipation recess forms a heat dissipation channel. The lower surface of the front floor refers to a side facing the ground during use.

In these embodiments, because the footrest plate 20 and the rear cross beam 30 are integrally formed on the frame body 10, the structural strength of the frame body 10 may be greatly improved, and the frame body 10 may provide sufficient protection for the heat dissipation component 104, which may solve the problem that the heat dissipation component 104 is easily trampled and deformed when directly arranged on the front floor.

In some embodiments, when the lower vehicle body frame assembly includes the front-row small longitudinal beam 91, a portion of the heat dissipation component 104 may also be arranged on the lower surface of the front-row small longitudinal beam 91, and the heat dissipation component 104 may also be protected by the front-row small longitudinal beam 91.

In some embodiments, when the lower vehicle body frame assembly includes the side-impact cross beam 11 (i.e., a first front cross beam 121 configured to mount a first-row seat), a second front cross beam 122, a second-row front cross beam 31 and a third-row front cross beam 33 (i.e., a second-row rear cross beam), the heat dissipation component 104 may be mounted on lower surfaces of the side-impact cross beam 11, the second front cross beam 122, the second-row front cross beam 31 and the third-row front cross beam 33, so that the side-impact cross beam 11, the second front cross beam 122, the second-row front cross beam 31 and the third-row front cross beam 33 may provide protection for the heat dissipation component 104.

In any of the above-mentioned embodiments, the integrally formed process may choose casting one-piece molding, stamping one-piece molding or turning one-piece molding. The materials of all parts may be aluminum alloy and other materials with high hardness and light weight.

Embodiments of a second aspect of the present application also provide a vehicle, which includes the lower vehicle body frame assembly of any embodiments of the first aspect. Since the vehicle of embodiments of the present application includes the lower vehicle body frame assembly described above, the vehicle of embodiments of the present application has the beneficial effects of the lower vehicle body frame assembly of embodiments described above, which will not be described here.

In some embodiments, the vehicle further includes a front engine compartment assembly arranged on a side of the footrest plate 20 facing away from the frame body 10. In some embodiments, the vehicle further includes a rear floor assembly arranged on a side of the rear cross beam 30 facing away from the frame body 10.

Although the present application has been described with reference to preferred embodiments, various improvements may be made thereto and equivalents may be substituted for parts thereof without departing from the scope of the present application. In particular, as long as there is no structural conflict, all the technical features mentioned in each embodiment may be combined in any way. The present application is not limited to the specific embodiments disclosed herein, but includes all technical solutions falling within the scope of the claims.

## Claims

1. A lower vehicle body frame assembly for a vehicle, wherein the lower vehicle body frame assembly comprises:
a frame body;
a footrest plate coupled to a side of the frame body; and
a rear cross beam coupled to a side of the frame body away from the footrest plate, the frame body, the footrest plate and the rear cross beam being integrally formed.

2. The lower vehicle body frame assembly according to claim 1, wherein the frame body comprises a side-impact cross beam and a front cross beam arranged side by side and spaced along a length direction of the frame body, the footrest plate is coupled to a side of the side-impact cross beam away from the front cross beam, and the rear cross beam is coupled to a side of the front cross beam away from the side-impact cross beam.

3. The lower vehicle body frame assembly according to claim 2, wherein the front cross beam comprises a first front cross beam and a second front cross beam, the first front cross beam and the side-impact cross beam are integrated, and the rear cross beam is coupled to a side of the second front cross beam away from the side-impact cross beam.

4. The lower vehicle body frame assembly according to claim 3, wherein the first front cross beam and the side-impact cross beam are a same cross beam, and the side-impact cross beam is configured to bear a side-impact load.

5. The lower vehicle body frame assembly according to claim 3, wherein the side-impact cross beam is provided with a coupling projection configured to couple to a seat, and the coupling projection is integrally formed with the side-impact cross beam and protruded from an upper surface of the side-impact cross beam.

6. The lower vehicle body frame assembly according to claim 2, wherein the rear cross beam comprises a second-row front cross beam, a second-row rear cross beam and a third-row front cross beam arranged side by side and spaced along the length direction, and the second-row rear cross beam and the third-row front cross beam are integrated.

7. The lower vehicle body frame assembly according to claim 2, further comprising:
a side longitudinal beam coupled to at least one side of the side-impact cross beam in a width direction of the lower vehicle body frame assembly; and
a sill beam comprising a first portion and a second portion, wherein the first portion is coupled to the side longitudinal beam and is integrally formed with the side longitudinal beam, the side-impact cross beam and the rear cross beam, and the second portion is detachably coupled to a side of the first portion away from the side longitudinal beam.

8. The lower vehicle body frame assembly according to claim 7, further comprising a sliding rail box arranged at the first portion and is integrally formed with the first portion, the side-impact cross beam and the front cross beam, wherein the sliding rail box is configured to bear a sliding door driver.

9. The lower vehicle body frame assembly according to claim 8, further comprising an avoidance channel configured to avoid the sliding door driver, wherein the avoidance channel is formed by a recess of the sill beam.

10. The lower vehicle body frame assembly according to claim 8, further comprising a rear torsion box coupled between the side longitudinal beam and the rear cross beam and is integrally formed with the side longitudinal beam and the rear cross beam.

11. The lower vehicle body frame assembly according to claim 10, wherein the rear torsion box comprises a body portion and a protruding portion formed by extending from the body portion, and the protruding portion is arranged to protrude from the cross beam in a height direction.

12. The lower vehicle body frame assembly according to claim 11, wherein the rear torsion box further comprises a plurality of reinforcing portions embedded in the protruding portion, and the plurality of reinforcing portions are crossed in the protruding portion.

13. The lower vehicle body frame assembly according to claim 1, further comprising a front torsion box coupled to at least one side of the footrest plate in a width direction of the frame body, and the front torsion box and the footrest plate are integrally formed.

14. The lower vehicle body frame assembly according to claim 1, further comprising:
a coupling structure arranged at a side of the footrest plate facing away from the body of the lower vehicle body frame assembly and is integrally formed with the footrest plate; and
a front longitudinal beam inserted on a side of the coupling structure facing away from the footrest plate.

15. The lower vehicle body frame assembly according to claim 14, further comprising a front-row small longitudinal beam coupled between the footrest plate and the frame body, wherein the front longitudinal beam and the front-row small longitudinal beam are at least partially aligned along a length direction of the lower vehicle body frame assembly.

16. The lower vehicle body frame assembly according to claim 15, wherein the frame body comprises a side-impact cross beam, and the front-row small longitudinal beam are coupled between the side-impact cross beam and the footrest plate.

17. The lower vehicle body frame assembly according to claim 10, further comprising a rear-row small longitudinal beam coupled between the frame body and the rear cross beam, and the sliding rail box and the rear-row small longitudinal beam are integrally formed.

18. The lower vehicle body frame assembly according to claim 1, further comprising a heat dissipation component configured to dissipate heat from a battery of the vehicle, and mounted on a lower surface of the frame body.

19. A vehicle, comprising a lower vehicle body frame assembly according to any one of claims 1-18.

20. The vehicle according to claim 19, further comprising a front engine compartment assembly arranged at a side of the footrest plate facing away from the frame body; and/or, the vehicle further comprising a rear floor assembly arranged at a side of the rear cross beam facing away from the frame body.
